# EUROPEAN PATENT APPLICATION

(11) **EP 4 478 700 A1**
(43) Date of publication of application: **18.12.2024**
(21) Application number: 23305944.3
(22) Date of filing: 14.06.2023
(51) Int. Cl.: H04N 7/14

(54) **VIDEO TELECONFERENCING METHOD AND APPARATUS**

(71) Applicant: Beijing Xiaomi Mobile Software Co., Ltd., Beijing 100085 (CN)
(72) Inventor: Potetsianakis, Emmanouil, 2563 TZ The Hague (NL); THOMAS, EMMANUEL, 2611 WD Delft (NL)
(74) Representative: RVDB Rennes

(57) **Abstract**

The present disclosure relates to a video teleconferencing method between at least two remote video teleconferencing apparatuses in communication via a communication network, wherein each video teleconferencing apparatus comprising a camera and a display, wherein at least one video teleconferencing apparatus, called first video teleconferencing apparatus, comprising a camera, called first camera, whose field of view covers at least partially a viewpoint of an end-user of the first video teleconferencing apparatus and a display, called first display, wherein the method comprises the following steps:
- capturing (100), by the first camera, a first video representative of a self-view of the end-user of the first video teleconferencing apparatus on a reflective surface of a mirror located in front of the end-user and in the field of view of the first camera;
- extracting (110), from the first video, at least one pixel region surrounding the self-view of the end-user; and
- transmitting (120) first video data representative of said at least one extracted pixel region to at least one remote video teleconferencing apparatus.

## Description

### 1. Technical field

The present disclosure relates to teleconferencing system comprising at least one video teleconferencing apparatus comprising a camera whose field of view covers at least partially a viewpoint of an end-user, such as, for example, camera of optical or video see-through head mounted display device.

### 2. Background

The present section is intended to introduce the reader to various aspects of art, which may be related to various aspects of the present principles that are described and/or claimed below. This discussion is believed to be helpful in providing the reader with background information to facilitate a better understanding of the various aspects of the present principles. Accordingly, it should be understood that these statements are to be read in this light, and not as admissions of prior art.

Recently there has been a growth of available large field-of-view content (up to 360°). Such content is potentially not fully visible by a user watching the content on immersive display devices such as Head Mounted Displays (HMDs) or smart glasses, PC screens, tablets, smartphones and the like. That means that at a given moment, a user may only be viewing a part of the content. Although a user can navigate within the content by various means such as head movement, mouse movement, touch screen, voice and the like. A large field-of-view content may be, among others, a three-dimension computer graphic imagery scene (3D CGI scene), a point cloud or an immersive video.

Many terms might be used to design such immersive videos: Virtual Reality (VR), 360, panoramic, 4π steradians, omnidirectional, large field of view, etc.

For coding an omnidirectional video into a bitstream, for instance for transmission over a data network, traditional video coder/decoder, such as HEVC (ISO/IEC 23008-2 High Efficiency Video Coding, ITU-T Recommendation H.265, https://www.itu.int/rec/T-REC-H.265-202108-P/en) or VVC (ISO/IEC 23090-3 Versatile Video Coding, ITU-T Recommendation H.266, https://www.itu.int/rec/T-REC-H.266-202008-I/en) can be used. Encoding an immersive video comprises projecting each picture of the immersive video on one or more 2D pictures, for example one or more rectangular pictures, using a suitable projection function. In practice, a picture of the immersive video is represented as a 3D surface. For ease of projection, usually a convex and simple surface such as a sphere, or a cube, or a pyramid are used for the projection. The projected 2D pictures representative of a picture of the immersive video are then coded/decoded using a traditional video coder/decoder such as HEVC, VVC, etc.... Rendering an immersive video comprises decoding the 2D pictures and inverse projecting the decoded 2D pictures.

One of the most promising and challenging future uses of HMDs is in applications where virtual environments enhance rather than replace real environments. To obtain an enhanced view of the real environment, the user wears a see-through HMD to see 3D computer generated objects superimposed on his/her real-world view. This see-through capability can be accomplished using either an optical or a video see-through HMD.

With optical see-through HMDs, the generic principle is that the user perceives both the real word and Computer-Generated Image (CGI) signals at the same time via an optical system. The real world is seen through semi-transparent display panel, typically equipped with mirrors placed in front of the user's eyes. These mirrors are also used to reflect the computer-generated images into the user's eyes, thereby combining the real- and virtual-world views.

With a video see-through HMD, the real-world view is captured with a number of miniature video cameras mounted on the head gear, and the CGI signals are electronically combined with the video representation of the real world and then displayed to the end-user.

Video conferencing relies on two or more parties exchanging real-time video and audio representative of themselves. This is typically achieved by using a camera (that records the user), a display (that shows the other users) and microphone/speaker. However, in Extended Reality (XR), the respective apparatus (HMDs, AR glasses etc.), even though often equipped with cameras, they are outwards facing and cannot record the user wearing the device, thus are not able to provide a self-view feed for video calls. To achieve capture of the self-view, an external camera is required, therefore hampering the independence and usability of dedicated XR devices.

Current teleconferencing approaches in XR are not trying to emulate the existing video calling experience, which is familiar to the users, but instead are trying to create a new, enriched video calling experience. Either by introducing avatars, that can be adjusted to more appropriately fit the scene (Taeheon Kim, Ashwin Kachhara, and Blair Mac Intyre. 2016. Redirected head gaze)), or by capturing and transmitting a 3D representation of the caller (Alexander Schäfer, Gerd Reis, and Didier Stricker. 2022. A Survey on Synchronous Augmented, Virtual, and Mixed Reality Remote Collaboration Systems. Comput. Surveys 55, 6 (2022), 1-27), or by rendering the video capture of the user in space (Mark Billinghurst and Hirokazu Kato. 1999. Real world teleconferencing. In CHI'99 extended abstracts on Human factors in computing systems. 194-195).

Such features can increase immersion but video calling experience can be further improved by introducing a real view of the end-user using HMDs. Currently, this is not possible because HMDs obstruct end-user's face. Newer optical see-through AR Glasses are getting a more compact and lean form, tending to resemble regular glasses, thus causing minimal occlusion to the wearer's facial characteristics.

However, the main obstacle to use face-obstructing devices in video teleconferencing systems is the lack of means to capture and display self-views of the end-users.

### 3. Summary

The following section presents a simplified summary of the at least one exemplary embodiment in order to provide a basic understanding of some aspects of the present disclosure. This summary is not an extensive overview of an exemplary embodiment. It is not intended to identify key or critical elements of an exemplary embodiment. The following summary merely presents some aspects of the at least one exemplary embodiment in a simplified form as a prelude to the more detailed description provided elsewhere in the document.

According to a first aspect of the present disclosure, there is provided a video teleconferencing method between at least two remote video teleconferencing apparatuses in communication via a communication network, wherein at least one video teleconferencing apparatus, called first video teleconferencing apparatus, comprising a camera, called first camera, whose field of view covers at least partially a viewpoint of an end-user of the first video teleconferencing apparatus and a display, called first display, wherein the video teleconferencing method comprises the following steps:
- capturing, by the first camera, a first video representative of a self-view of the end-user of the first video teleconferencing apparatus on a reflective surface located of a mirror in front of the end-user and in the field of view of the first camera;
- extracting, from the first video, at least one pixel region surrounding the self-view of the end-user; and
- transmitting first video data representative of said at least one extracted pixel region to at least one remote video teleconferencing apparatus.

In one variant, the video teleconferencing method further comprises:
- receiving second video data from a remote video teleconferencing apparatus; and
- rendering on the first display a second video from the received second data in order to cover at least part of the reflective surface on the first display.

In one exemplary embodiment, wherein the first video teleconferencing apparatus being a video-see-trough apparatus, and wherein rendering the second video comprises replacing pixels of the first display belonging to the at least one extracted pixel region by pixels of the second video.

In one exemplary embodiment, wherein the first video teleconferencing apparatus being an optical see-through apparatus and wherein the second video is rendered from the received second video data on an area of the first display in order to cover a projection of the reflective surface on the first display.

In one exemplary embodiment, pixels of the second video corresponding to the projection of the reflective surface on the first display having opacity values adapted to hide the self-view of end-user on the reflective surface, and the projection of the reflective surface on the first display being adapted to the viewpoint of end-user.

In one variant, the video teleconferencing method further comprises receiving third video data representative of a third video; and rendering a third video from the received third video data over an area that extends beyond the projection of the reflective surface on the display and in order to cover the second video.

In one variant, the video teleconferencing method further comprises receiving third video data representative of a third video and rendering a third video from the received third video data over an area around the area corresponding to the projection of the reflective surface on the first display.

In one exemplary embodiment, the at least one extracted pixel region is detected in the first video based on a detection of a face.

In one exemplary embodiment, the at least one extracted pixel region is detected in the first video based on a detection of a view of the first video teleconferencing apparatus in the first video.

In one exemplary embodiment, the at least one extracted pixel region is detected based at least in part on correlation of movements detected in the first video with sensor data captured by sensor of the first video teleconferencing apparatus.

In one variant, the video teleconferencing method further comprises removing or replacing a background of the at least one extracted pixel region before transmitting.

In one variant, the video teleconferencing method further comprises formatting the at least one extracted pixel region into a video format or volumetric format or encapsulating the at least one extracted pixel region in Real-Time Transport Protocol packets suitable for real-time communication.

According to a second aspect of the present disclosure, there is provided a computer program product including instructions which, when the program is executed by one or more processors, causes the one or more processors to carry out a video teleconferencing method according to the first aspect of the present disclosure.

According to a third aspect of the present disclosure, there is provided a video teleconferencing apparatus comprising means for performing the steps of the video teleconferencing method according to the first aspect of the present disclosure.

According to a fourth aspect of the present disclosure, there is provided a video teleconferencing system comprising at least one video teleconferencing apparatus according to the third aspect of the present disclosure.

The specific nature of at least one of the exemplary embodiments as well as other objects, advantages, features, and uses of said at least one of exemplary embodiments will become evident from the following description of examples taken in conjunction with the accompanying drawings.

### 4. Brief description of the drawings

**Figure 1** shows an illustrative example of a video teleconferencing system in accordance with exemplary embodiment of the present disclosure;
**Figure 2** illustrates a schematic block diagram of an example of a video teleconferencing apparatus in accordance with exemplary embodiment of the present disclosure;
**Figure 3** shows a schematic block diagram illustrating the steps of a video teleconferencing method in accordance with an exemplary embodiment of the present disclosure;
**Figure 4** shows an illustrative example of execution of the video teleconferencing method of **Figure** 1;
**Figure 5** shows an illustrative example of execution of the video teleconferencing method of **Figure** 1;
**Figure 6** shows an illustrative example of execution of the video teleconferencing method of **Figure 1****.**

Similar or same elements are referenced with the same reference numbers.

### DESCRIPTION OF EXEMPLARY EMBODIMENTS

At least one of the exemplary embodiments is described more fully hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed.

A video comprises consecutive video pictures having temporal relationships between them.

A video picture, also denoted frame or picture frame, comprises at least one component (also called picture component, or channel) determined by a specific picture/video format which specifies all information relative to pixel values and all information which may be used by a display unit and/or any other device to display and/or to decode video picture data related to said video picture.

A video picture comprises at least one component usually expressed in the shape of an array of samples.

A monochrome video picture comprises a single component and a color video picture may comprise three components.

For example, a color video picture may comprise a luma (or luminance) component and two chroma components when the picture/video format is the well-known (Y,Cb,Cr) format or may comprise three color components (one for Red, one for Green and one for Blue) when the picture/video format is the well-known (R,G,B) format.

Each component of a video picture may comprise a number of samples relative to a number of pixels of a screen on which the video picture is intended to be display. In variants, the number of samples comprises in a component may be a multiple (or fraction) of a number of samples comprised in another component of a same video picture.

For example, in the case of a video format comprising a luma component and two chroma component like the (Y,Cb,Cr) format, dependent on the color format considered, the chroma component may contain half the number of samples in width and/or height, relative to the luma component.

A sample is the smallest visual information unit of a component composing a video picture. A sample value may be, for example a luma or chroma value or a colour value of a (R, G, B) format. A luma sample is a luma value and a chroma sample is a chroma or a colour value.

A pixel value is the value of a pixel of a screen. A pixel value may be represented by one sample for monochrome video picture and by multiple co-located samples for color video picture. Co-located samples associated with a pixel mean samples corresponding to the location of a pixel in the screen.

It is common to consider a video picture as being a set of pixel values, each pixel being represented by at least one sample.

The at least one exemplary embodiment is not limited to a particular picture/video format.

At least one of the aspects generally relates to video teleconferencing system comprising at least two remote video teleconferencing apparatuses in communication via a communication network such as Internet for example. At least one video teleconferencing apparatus, called first video teleconferencing apparatus, comprises a camera, called first camera, whose field of view covers at least partially a point of view of the end-user of the first video teleconferencing apparatus, a display, called first display, and a mirror located in front of the user and in the field of view of the first camera. A first video representative of a self-view of the end-user of the first video teleconferencing apparatus on a reflective surface of the mirror is captured by the first and at least one pixel region corresponding to the self-view of the end-user is extracted from the first video. Then, first video data is transmitted to at least one remote video teleconferencing apparatus. The first video data is representative of said at least one extracted pixel region.

The first video teleconferencing apparatus is used by an end-user. Such a first teleconferencing apparatus uses a camera to detect a self-view of the end-user on the reflective surface of the mirror. The captured video of the end-user is then transmitted during a video call to remote video teleconferencing apparatus that can display a real view of the end-user rather than, for example, his avatar as in prior art.

Using the first video teleconferencing apparatus in a video call improves the end-user experience of video calls compared to usual video teleconferencing system using see-through HMDs and/or AR Glasses because both participants of a video calls see the real persons, no avatar needed which is known to often have severe issues for the quality of experience (effect known as uncanny valley) or unsuitable for the usage scenario (e.g. professional and work setting).

Using the first video teleconferencing apparatus in a video call further provide the illusion of proximity between people, i.e. the other party image is not floating around but is anchored into a physical object of the local real scene.

Using the first video teleconferencing apparatus in a video call consumes less resources (computing power, memory,...) compared to avatar solution that requires tracking of the full user body and then a generative process of the avatar, typically based on Artificial Intelligence family of algorithms.

Using the first video teleconferencing apparatus in a video call is also advantageous because no need of external phone or camera capturing the user to provide a real view of the user.

In one exemplary embodiment, the first video teleconferencing apparatus may receive a video of another party, which may then be rendered on top of the display area corresponding to that the mirror occupies, hence hiding the user's self-view to himself or herself.

Therefore, the mirror of the first video teleconferencing apparatus acts both as a capture area (for the camera), to record the self-view of the end-user, and as an area to display a video of a remote user.

Therefore, the present disclosure solves the problem of obscuring the self-view of end-users and does not require neither additional displays nor external cameras and allow interoperability between video teleconferencing apparatus types such HMDs, phones, PCs, AR glasses which can then be mixed.

The present disclosure is also advantageous because the capture of the end-user's view by the first camera on the reflective surface and the rendering of the received video from another party can be parallel processed because they are independent processes.

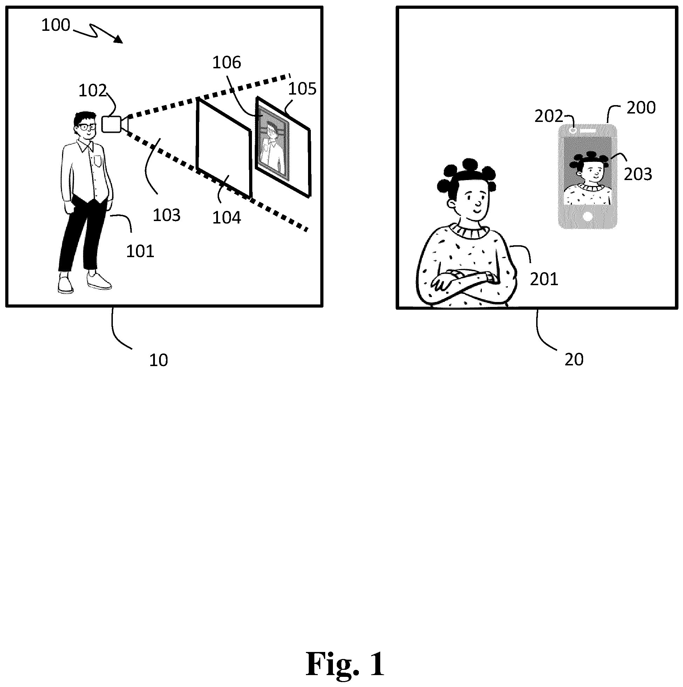

**Figure** 1 shows an example of a video teleconferencing system 1 in accordance with an exemplary embodiment of the present disclosure.

The video teleconferencing system 1 comprises a first video teleconferencing apparatus 100 located at place 10 and a second video teleconferencing apparatus 200 located at a remote place 20.

Second video teleconferencing apparatus are not limited to a specific type but may extend to any apparatus comprising means for joining a video teleconferencing system. In particular, each video teleconferencing apparatus shall comprise a camera and a video display.

An end-user 101 is using the first video teleconferencing apparatus 100 during a video call, and an end-user 201 is using the second video teleconferencing apparatus 200 during the video call.

The video teleconferencing system is not limited to two video teleconferencing apparatuses but may extends to an unlimited number of first video teleconferencing apparatuses and/or an unlimited number of second video teleconferencing apparatuses.

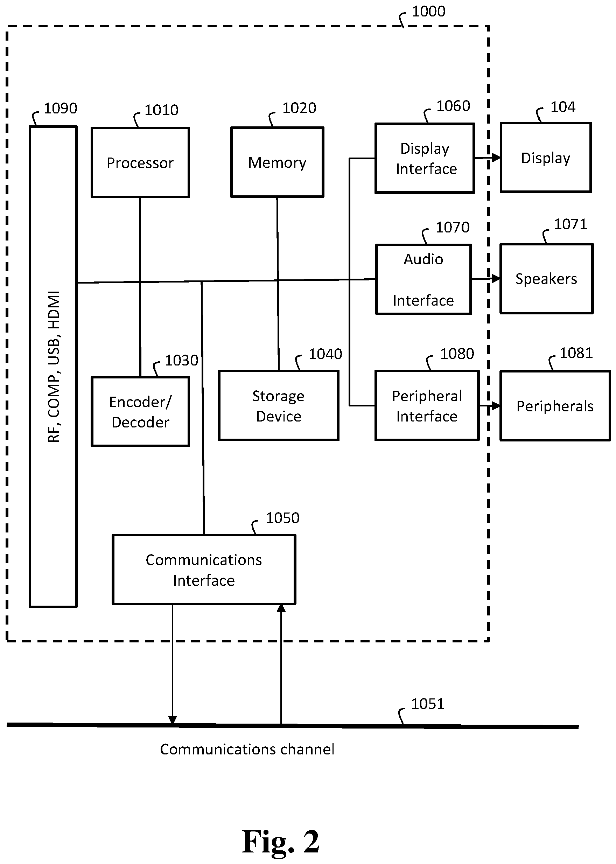

**Figure** 2 shows a schematic block diagram illustrating an example of the first video teleconferencing apparatus 100 in which various aspects and exemplary embodiments of the present disclosure are implemented.

First video teleconferencing apparatus 100 may be embedded as one or more devices including the various components described below. In various exemplary embodiments, first video teleconferencing apparatus 100 may be configured to implement one or more of the aspects described in the present disclosure.

Exemplary embodiments of equipment that may form part of the first video teleconferencing apparatus 100 include optical or video HMDs devices or AR Glasses for example.

According to the present disclosure, the first video teleconferencing apparatus 100 further comprises a mirror 105 placed in from of the end-user 101 i.e. a reflective surface of mirror 105 is located in front of the user's eyes (end-user 101) in order to reflect a self-view of the end-user 101.

When the first video teleconferencing apparatus comprises a video see-through apparatus, e.g. HMD, video to be displayed is computed and displayed on a display 104 of the video see-through apparatus. The displayed video may be a combination of two or more videos. The pixels of display 104 that correspond to the pixels of the reflective surface of the mirror 105 are replaced by pixels values of the displayed video. Then self-view of an end-user is then hidden.

When the first video teleconferencing apparatus comprises an optical see-through apparatus, the display 104 of the optical see-through apparatus is a semi-transparent display and the end-user 101 wearing such optical see-through apparatus watches himself/herself on the reflective surface of the mirror 105 before starting the teleconferencing session. When the session starts, the semi-transparent display 104 can display images in such a way that the end-user of the optical see-through apparatus does not see his/her self-view on the reflective surface. For example, CGI images are displayed on top the surface 105 to hide the self-view of an end-user.

According to the present disclosure, pixels of a video to be displayed on the semi-transparent display which correspond to pixels to a projection of the reflective surface of the mirror 105 on the semi-transparent display 104 have opacity values adapted to hide the end-user's self-view on the reflective surface of the mirror 105. The video to be displayed on the semi-transparent display 104 then covers the reflective surface of the mirror 105 and the end-user of the optical see-through apparatus does not see his/her self-view on the reflective surface of the mirror 105.

In one exemplary embodiment, the projection of the reflective surface of the mirror 105 on the semi-transparent display 104 is adapted to the end-user viewpoint by using a well-known alignment method (i.e. an aligning method of virtual objects into a real scene according to an end-user viewpoint).

Elements of first video teleconferencing apparatus 100, singly or in combination, may be embodied in a single integrated circuit (IC), multiple ICs, and/or discrete components. For example, in at least one exemplary embodiment, the processing and encoder/decoder elements of first video teleconferencing apparatus 100 may be distributed across multiple ICs and/or discrete components.

First video teleconferencing apparatus 100 may include at least one processor 1010 configured to execute instructions loaded therein for implementing, for example, the various aspects described in the present disclosure. Processor 1010 may include embedded memory, input/output interface, and various other circuitries as known in the art. First video teleconferencing apparatus 100 may include at least one memory 1020 (for example a volatile memory device and/or a non-volatile memory device). First video teleconferencing apparatus 100 may include a storage device 1040, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 1040 may include an internal storage device, an attached storage device, and/or a network accessible storage device, as non-limiting examples.

First video teleconferencing apparatus 100 may include an encoder/decoder module 1030 configured, for example, to process data to provide encoded/decoded video data, and the encoder/decoder module 1030 may include its own processor and memory. The encoder/decoder module 1030 may represent module(s) that may be included in a device to perform the encoding and/or decoding functions. As is known, a device may include one or both encoding and decoding modules. Additionally, encoder/decoder module 1030 may be implemented as a separate element of first video teleconferencing apparatus 100 or may be incorporated within processor 1010 as a combination of hardware and software as known to those skilled in the art.

Program code to be loaded onto processor 1010 or encoder/decoder 1030 to perform the various aspects described in the present disclosure may be stored in storage device 1040 and subsequently loaded onto memory 1020 for execution by processor 1010. In accordance with various exemplary embodiments, one or more of processor 1010, memory 1020, storage device 1040, and encoder/decoder module 1030 may store one or more of various items during the performance of the processes described in the present disclosure. Such stored items may include, but are not limited to video data, information data used for encoding/decoding video data, a bitstream, matrices, variables, and intermediate or final results from the processing of equations, formulas, operations, and operational logic.

In several exemplary embodiments, memory inside of the processor 1010 and/or the encoder/decoder module 1030 may be used to store instructions and to provide working memory for processing that may be performed during encoding or decoding.

In other exemplary embodiments, however, a memory external to the processing device (for example, the processing device may be either the processor 1010 or the encoder/decoder module 1030) may be used for one or more of these functions. The external memory may be the memory 1020 and/or the storage device 1040, for example, a dynamic volatile memory and/or a non-volatile flash memory. In at least one exemplary embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), (ISO/IEC 14496-10 Advanced Video Coding for generic audio-visual services, ITU-T Recommendation H.264, https://www.itu.int/rec/T-REC-H.264-202108-P/en), EVC (ISO/IEC 23094-1 Essential video coding), HEVC, VVC but may be applied to other standards and recommendations such as AV1 (AOMedia Video 1, http://aomedia.org/av1 /specification/), etc.

In various exemplary embodiments, first video teleconferencing apparatus 100 may be communicatively coupled to other similar apparatuses, or to other electronic devices via, for example, a wired or wireless communication network, a communication bus or through dedicated input and/or output ports.

In one exemplary embodiment, an input to the elements of first video teleconferencing apparatus 100 may be provided through various input devices as indicated in block 1090.

According to the present disclosure, illustrated **on** **Figure 1****,** one of said input devices is a camera 102 whose field of view covers at least partially a viewpoint of the end-user 101.

Input devices as indicated in block 1090 may include, but are not limited to, (i) an RF portion that may receive an RF signal transmitted, for example, over the air by a broadcaster, (ii) a Composite input terminal, (iii) a USB input terminal, (iv) an HDMI input terminal, (v) a bus such as CAN (Controller Area Network), CAN FD (Controller Area Network Flexible Data-Rate), FlexRay (ISO 17458) or Ethernet (ISO/IEC 802-3) bus when the present disclosure is implemented in the automotive domain.

In various exemplary embodiments, the input devices as indicated in block 1090 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain exemplary embodiments, (iv) demodulating the down-converted and band-limited signal, (v) performing error correction, and (vi) demultiplexing to select the desired stream of data packets. The RF portion of various exemplary embodiments may include one or more elements to perform these functions, for example, frequency selectors, signal selectors, band-limiters, channel selectors, filters, downconverters, demodulators, error correctors, and de-multiplexers. The RF portion may include a tuner that performs various of these functions, including, for example, down-converting the received signal to a lower frequency (for example, an intermediate frequency or a near-baseband frequency) or to baseband.

Various exemplary embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various exemplary embodiments, the RF portion may include an antenna.

Additionally, the USB and/or HDMI terminals may include respective interface processors for connecting first video teleconferencing apparatus 100 to other electronic devices across USB and/or HDMI connections. It is to be understood that various aspects of input processing, for example, Reed-Solomon error correction, may be implemented, for example, within a separate input processing IC or within processor 1010 as necessary. Similarly, aspects of USB or HDMI interface processing may be implemented within separate interface ICs or within processor 1010 as necessary. The demodulated, error corrected, and demultiplexed stream may be provided to various processing elements, including, for example, processor 1010, and encoder/decoder 1030 operating in combination with the memory and storage elements to process the data stream as necessary for presentation on an output device.

Various elements of first video teleconferencing apparatus 100 may be provided within an integrated housing. Within the integrated housing, the various elements may be interconnected and transmit data therebetween using suitable connection arrangement 1090, for example, an internal bus as known in the art, including the I2C bus, wiring, and printed circuit boards.

First video teleconferencing apparatus 100 may further includes communication interface 1050 that enables communication with other devices, such as the second video teleconferencing apparatus 200, via communication channel 1051. The communication interface 1050 may include, but is not limited to, a transceiver configured to transmit and to receive data over communication channel 1051. The communication interface 1050 may include, but is not limited to, a modem or network card and the communication channel 1051 may be implemented, for example, within a wired and/or a wireless medium.

Video data may be streamed to or from the first video teleconferencing apparatus 100, in various exemplary embodiments, using a Wi-Fi network such as IEEE 802.11. The Wi-Fi signal of these exemplary embodiments may be received/transmitted over the communications channel 1051 and the communications interface 1050 which are adapted for Wi-Fi communications. The communications channel 1051 of these exemplary embodiments may be typically connected to an access point or router that provides access to outside networks including the Internet for allowing streaming applications and other over-the-top communications.

Other exemplary embodiments may provide streamed video data to external devices or receive streamed video data from external device, such as the second video teleconferencing apparatus 200 over a connection (e.g. a HDMI or RF connection) of the input block 1090.

The streamed video data may be used as a way for signaling information used by the first video teleconferencing apparatus 100 or by the second video teleconferencing apparatus 200. The signaling information may comprise a bitstream and/or information such a number of pixels of a video picture and/or any coding/decoding setup parameters relative to an encoding/decoding and/or a display and/or a rendering of the streamed video data.

It is to be appreciated that signaling may be accomplished in a variety of ways. For example, one or more syntax elements, flags, and so forth may be used to signal information in various exemplary embodiments.

First video teleconferencing apparatus 100 may provide a video signal to the display 104 and possibly to other various output devices, including speakers 1071, and other peripheral devices 1081. The other peripheral devices 1081 may include, in various examples of exemplary embodiments, one or more of a disk player, a stereo system, a lighting system, and other devices that provide a function based on the output of first video teleconferencing apparatus 100.

In various exemplary embodiments, control signals may be communicated between the first video teleconferencing apparatus 100 and output devices such as the display 104, speakers 1071, or other peripheral devices 1081 using signaling such as AV.Link (Audio/Video Link), CEC (Consumer Electronics Control), or other communications protocols that enable device-to-device control with or without user intervention.

The output devices may be communicatively coupled to first video teleconferencing apparatus 100 via dedicated connections through respective interfaces 1060, 1070, and 1080.

Alternatively, the output devices may be connected to first video teleconferencing apparatus 100 using the communications channel 1051 via the communication interface 1050. The display 104 and speakers 1071 may be integrated in a single unit with the other components of first video teleconferencing apparatus 100 in an electronic device such as, for example, an optical or video see-through HMD.

In various exemplary embodiments, the display interface 1060 may include a display driver, such as, for example, a timing controller (T Con) chip.

The display 104 and speaker 1071 may alternatively be separate from one or more of the other components. In various exemplary embodiments in which the display 104 and speakers 1071 may be external components, the output signal may be provided via dedicated output connections, including, for example, HDMI ports, USB ports, or COMP outputs.

The second video teleconferencing apparatus 200 of **Figure 1****,** used by the end-user 201 comprises a camera 202 and a display 203.

Examples of equipment that may form all or part of the second video teleconferencing apparatus 200 include personal computers, laptops, smartphones, tablet computers, digital television receivers, personal video recording systems, connected home appliances, connected vehicles and their associated processing systems, optical or video HMDs, AR Glasses, projectors (beamers), "caves" (system including multiple displays), or any other communication devices.

The camera 202 is used along a video call to capture a video of the end-user 201. The captured video of the end-user 201 may be displayed on the display 203 as illustrated on **Figure 1****.**

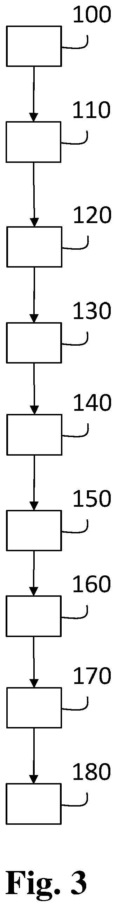

**Figure 3** shows a schematic block diagram illustrating the steps of a video teleconferencing method in accordance with an exemplary embodiment of the present disclosure;

In step 100, as illustrated on **Figure 1****,** a first video representative of a self-view of the end-user 101 on the reflective surface of the mirror 105 is captured by the camera 102 (also called first camera).

In step 110, at least one pixel region is extracted from the first video. Said at least one pixel region correspond to a spatial area of the reflective surface of the mirror 105 surrounding a self-view of the end-user 101.

A pixel region of the first video may be defined as a set of pixel locations of the first video and video data corresponding to said set of pixel locations. Video data corresponding to said set of pixel locations change along a video call.

In one exemplary embodiment, illustrated on **Figure 1****,** a single pixel region 106 is extracted from the first video.

In a variant, the area of the extracted pixel region is the area of the reflective surface of the mirror 105.

In one exemplary embodiment, the at least one pixel region is extracted from the first video based on a detection of a face.

In one exemplary embodiment, the at least one pixel region is extracted from the first video based on a detection of a view of the first video teleconferencing apparatus 100 in the first video.

In one exemplary embodiment, the at least one pixel region is extracted from the first video based at least in part on correlation of movements detected in the first video with sensor data captured by sensor of the first video teleconferencing apparatus 100.

For example, sensor data may be movements derived by object tracking means implemented by the first video teleconferencing apparatus 100 which temporally track objects detected in the first video. Well-known object tracking approaches can be used.

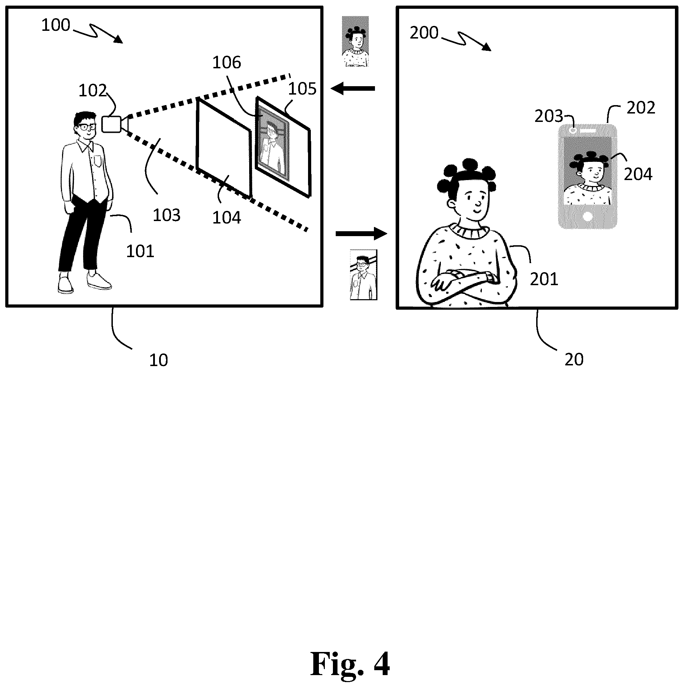

In step 120, illustrated on **Figure 4****,** first video data representative of video data corresponding to said at least one extracted pixel region is transmitted to at least one remote video teleconferencing apparatus such as, for example the second remote video teleconferencing apparatus 200 of **Figure 1****.**

The at least one remote video teleconferencing apparatus may then compute a rendering of a first video from received first video data on a display.

In one variant, the video conferencing method further comprises steps 130 and 140.

In step 130, second video data is received by the first video teleconferencing apparatus 100 from a remote video teleconferencing apparatus for example from the second video teleconferencing apparatus 200.

In step 140, a second video is then rendered on the display of the video teleconferencing apparatus, called first display, from the received second video data in order to cover the reflective surface of the mirror 105 on the first display.

In one exemplary embodiment of step 140, the first video teleconferencing apparatus is a video-see-through apparatus, rendering the second video comprises replacing pixels of the first display belonging to the at least one extracted pixel region by pixels of the second video.

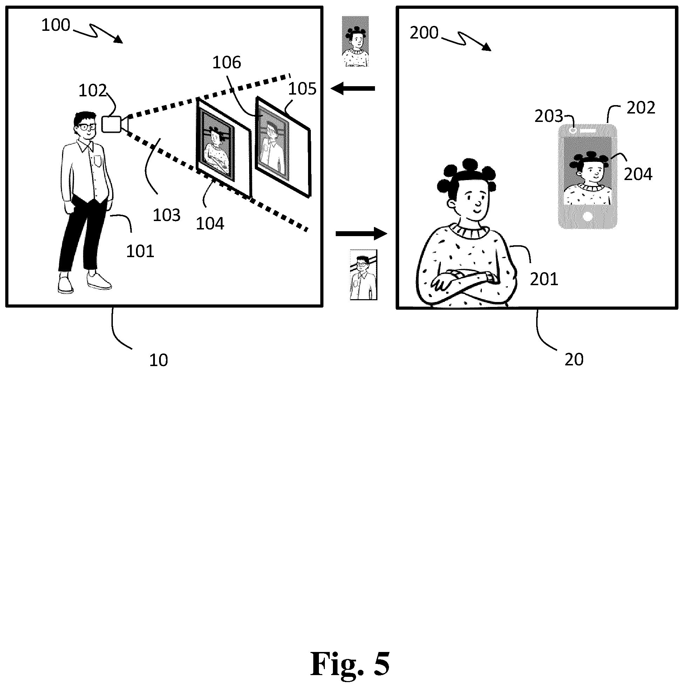

In one exemplary embodiment of step 140, illustrated on **Figure 5****,** when the first video teleconferencing apparatus 100 is an optical see-through apparatus such as a HMD, the second video is rendered from the received second video data on an area of the display 104 in order to cover a projection of the reflective surface of the mirror 105 on the display 104.

In one exemplary embodiment, pixels of the second video corresponding to the projection of the reflective surface of the mirror 105 on the display 104 have opacity values adapted to hide the self-view of end-user 101 on the reflective surface of the mirror 105, and the projection of the reflective surface of the mirror 105 on the display 104 is adapted (aligned) to the viewpoint of end-user 101.

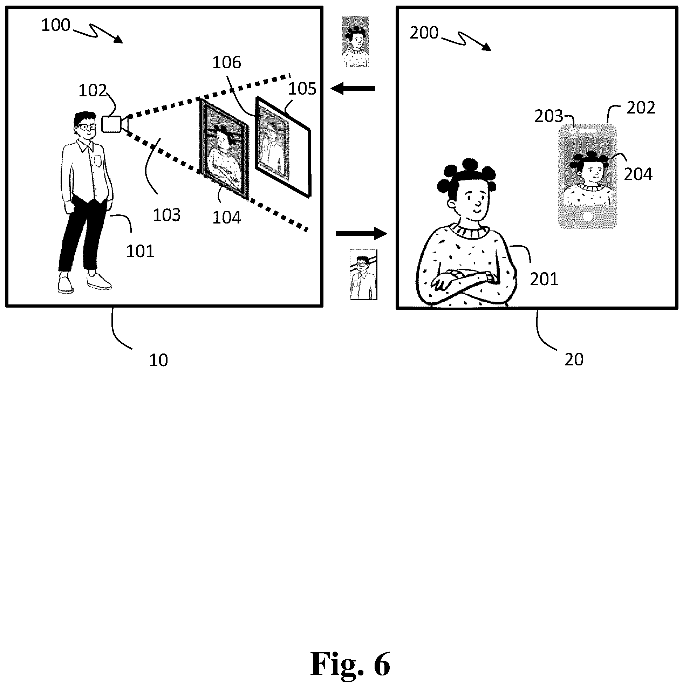

In one exemplary embodiment, illustrated on **Figure 6****,** the second video is rendered over the full display 104.

When the first video teleconferencing apparatus 100 is an optical see-through apparatus, pixels of the second video corresponding to the projection of the reflective surface of the mirror 105 on the display 104 have opacity values adapted to hide the reflective surface of the mirror 105, and the projection of the reflective surface of the mirror 105 on the display 104 is adapted (aligned) to the viewpoint of end-user 101.

In one exemplary embodiment, when the first video teleconferencing apparatus 100 is a video see-through apparatus, the first video being displayed at least partially on the display 104, rendering (step 140) of the second video comprises replacing pixel values of the first video by pixel values of the second video.

In one variant, the video conferencing method further comprises steps 150 and 160.

In step 150, third video data representative of a third video is received.

The third video data may be representative, for example of a shared view of an application, e.g. office, presentation, desktop, etc.

In step 160, the third video is rendered from the received third video data over an area of the display 104 that extends beyond the projection of the reflective surface of the mirror 105 on the display 104 and in order to cover the second video.

For example, the third video is rendered over the full display 104.

When the first video teleconferencing apparatus 100 is an optical see-through apparatus, e.g. HMD, the third video is rendered from the received third video data on an area of the display 104 in order to cover the projection of the reflective surface of the mirror 105 on the display 104. Pixels of the third video corresponding to the projection of the reflective surface of the mirror 105 on the display 104 have opacity values adapted to hide the self-view of end-user 101 on the reflective surface of the mirror 105, and the projection of the reflective surface of the mirror 105 on the display 104 is adapted (aligned) to the viewpoint of end-user 101.

In a variant of step 160, the third video is rendered from the received third video data over an area around the area corresponding to the projection of the reflective surface of the mirror 105 on the display 104.

This variant is advantageous because it allows to render simultaneously the second video (for example a self-view of the end-user 201) on an area corresponding to the projection of reflective surface of the mirror 105 and the third video on the display 104.

In one variant, the video conferencing method further comprises step 170 in the course of which a background of the at least one extracted pixel region is removed or replaced before transmitting (step 120).

In one variant, the video conferencing method further comprises step 180 in the course of which the at least one extracted pixel region is formatted into a video format or volumetric format such as for example based on ISOBMFF (ISO/IEC 14496-12) or one of its derivatives, or based on the Real-Time Transport Protocol (RTP) suitable for real-time communication.

This embodiment may be advantageous when stereoscopic camera or depth-aware camera (Time-of-Flight, infra-red-based depth image, etc..) are used as camera 102 of the first video teleconferencing apparatus 100.

In **Figures 1-6****,** various methods are described herein, and each of the methods includes one or more steps or actions for achieving the described method. Unless a specific order of steps or actions is required for proper operation of the method, the order and/or use of specific steps and/or actions may be modified or combined.

Some examples are described regarding block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present exemplary embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

Computer software may be implemented by the processor 1010 or by hardware, or by a combination of hardware and software. As a non-limiting example, the exemplary embodiments may be also implemented by one or more integrated circuits. The memory 1020 may be of any type appropriate to the technical environment and may be implemented using any appropriate data storage technology, such as optical memory devices, magnetic memory devices, semiconductor-based memory devices, fixed memory, and removable memory, as non-limiting examples. The processor 910 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry video data of a described exemplary embodiment. Such a signal may be formatted, for example, as an electromagnetic wave (for example, using a radio frequency portion of spectrum) or as a baseband signal. The formatting may include, for example, encoding a video data stream and modulating a carrier with the encoded video data stream. The information that the signal carries may be, for example, analog or digital information. The signal may be transmitted over a variety of different wired or wireless links, as is known. The signal may be stored on a processor-readable medium.

The terminology used herein is for the purpose of describing particular exemplary embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" or "associated with" to another element, it may be directly responsive or connected to or associated with the other element, or intervening elements may be present. In contrast, when an element is referred to as being "directly responsive" or "directly connected" to or "directly associated with" other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present disclosure. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of the present disclosure. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the exemplary embodiment/implementation) is included in at least one exemplary embodiment/implementation. Thus, the appearances of the phrase "in one exemplary embodiment" or "in an exemplary embodiment" or "in one implementation" or "in an implementation", as well any other variations, appearing in various places throughout the present disclosure are not necessarily all referring to the same exemplary embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation.

Thus, the appearances of the expression "in accordance with an exemplary embodiment/example/implementation" or "in an exemplary embodiment/example/implementation" in various places in the present disclosure are not necessarily all referring to the same exemplary embodiment/example/implementation, nor are separate or alternative exemplary embodiment/examples/implementation necessarily mutually exclusive of other exemplary embodiments/examples/implementation.

Reference numerals appearing in the claims are by way of illustration only and shall have no limiting effect on the scope of the claims. Although not explicitly described, the present exemplary embodiments/examples and variants may be employed in any combination or sub-combination.

When a figure. is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this disclosure, may encompass all or part of the processes performed, for example, on a received video picture (including possibly a received bitstream which encodes one or more video picture) in order to produce a final output suitable for display or for further processing in the reconstructed video domain. In various exemplary embodiments, such processes include one or more of the processes typically performed by a decoder. In various exemplary embodiments, such processes also, or alternatively, include processes performed by a decoder of various implementations described in the present disclosure, for example,

As further examples, in one exemplary embodiment "decoding" may refer only to dequantizing, in one exemplary embodiment "decoding" may refer to entropy decoding, in another exemplary embodiment "decoding" may refer only to differential decoding, and in another exemplary embodiment "decoding" may refer to combinations of dequantizing, entropy decoding and differential decoding. Whether the phrase "decoding process" may be intended to refer specifically to a subset of operations or generally to the broader decoding process will be clear based on the context of the specific description and is believed to be well understood by those skilled in the art.

Various implementations involve encoding. In an analogous way to the above discussion about "decoding", "encoding" as used in the present disclosure may encompass all or part of the processes performed, for example, on an input video picture in order to produce an output bitstream. In various exemplary embodiments, such processes include one or more of the processes typically performed by an encoder. In various exemplary embodiments, such processes also, or alternatively, include processes performed by an encoder of various implementations described in this disclosure.

As further examples, in one exemplary embodiment "encoding" may refer only to quantizing, in one exemplary embodiment "encoding" may refer only to entropy encoding, in another exemplary embodiment "encoding" may refer only to differential encoding, and in another exemplary embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, this disclosure may refer to "receiving" various pieces of information. Receiving the information may include one or more of, for example, accessing the information, or receiving information from a communication network.

Also, as used herein, the word "signal" refers to, among other things, indicating something to a corresponding decoder. For example, in certain exemplary embodiments the encoder signals a particular information such as encoded video data. In this way, in an exemplary embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various exemplary embodiments. It is to be appreciated that signaling may be accomplished in a variety of ways. For example, one or more syntax elements, flags, and so forth are used to signal information to a corresponding decoder in various exemplary embodiments. While the preceding relates to the verb form of the word "signal", the word "signal" may also be used herein as a noun.

Also, as used herein, the word "rendering" refers to, among other things, indicating something to a corresponding display a video. For example, rendering may include all operations to obtain data of an immersive video ready to be displayed on the display 104 or on the reflective surface of the mirror 105. Operations of a rendering may include, parsing, projecting/ invers projection data, combining multiple video data to obtain a combined video, for example.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this disclosure.

## Claims

1. A video teleconferencing method between at least two remote video teleconferencing apparatuses in communication via a communication network, wherein at least one video teleconferencing apparatus, called first video teleconferencing apparatus, comprising a camera, called first camera, whose field of view covers at least partially a viewpoint of an end-user of the first video teleconferencing apparatus and a display, called first display, wherein the method comprises the following steps:
- capturing (100), by the first camera, a first video representative of a self-view of the end-user of the first video teleconferencing apparatus on a reflective surface of a mirror located in front of the end-user and in the field of view of the first camera;
- extracting (110), from the first video, at least one pixel region surrounding a the self-view of the end-user; and
- transmitting (120) first video data representative of said at least one extracted pixel region to at least one remote video teleconferencing apparatus.

2. The video teleconferencing method of claim 1, wherein the method further comprises:
- receiving (130) second video data from a remote video teleconferencing apparatus; and
- rendering (140) on the first display a second video from the received second data in order to cover at least part of the reflective surface on the first display.

3. The video teleconferencing method of claim 2, wherein the first video teleconferencing apparatus is a video-see-through apparatus, and wherein rendering (140) the second video comprises replacing pixels of the first display belonging to the at least one extracted pixel region by pixels of the second video.

4. The video teleconferencing method of claim 2, wherein the first video teleconferencing apparatus is an optical see-through apparatus and wherein the second video is rendered (140) from the received second video data on an area of the first display in order to cover a projection of the reflective surface on the first display.

5. The video teleconferencing method of claim 4, wherein pixels of the second video corresponding to the projection of the reflective surface on the first display having opacity values adapted to hide the self-view of the end-user on the reflective surface , and the projection of the reflective surface on the first display being adapted to the viewpoint of end-user.

6. The video teleconferencing method of one of claims 2 to 5, wherein the method further comprising:
- receiving (150) third video data representative of a third video; and
- rendering (160) a third video from the received third video data over an area that extends beyond the projection of the reflective surface on the first display and in order to cover the second video.

7. The video teleconferencing method of one of claims 2 to 5, wherein the method further comprising:
- receiving (150) third video data representative of a third video; and
- rendering (160) a third video from the received third video data over an area around the area corresponding to the projection of the reflective surface on the first display.

8. The video teleconferencing method of one of claims 1 to 7, wherein the at least one extracted pixel region is detected in the first video based on a detection of a face.

9. The video teleconferencing method of one of claims 1 to 7, wherein the at least one extracted pixel region is detected in the first video based on a detection of a view of the first video teleconferencing apparatus in the first video.

10. The video teleconferencing method of one of claims 1 to 7, wherein the at least one extracted pixel region is detected based at least in part on correlation of movements detected in the first video with sensor data captured by sensor of the first video teleconferencing apparatus.

11. The video teleconferencing method of one of claims 1 to 10, wherein the method further comprises removing or replacing (170) a background of the at least one extracted pixel region before transmitting.

12. The video teleconferencing method of one of claims 1 to 11, wherein the method further comprises formatting (180) the at least one extracted pixel region into a video format or volumetric format or encapsulating the at least one extracted pixel region in Real-Time Transport Protocol packets suitable for real-time communication.

13. A computer program product including instructions which, when the program is executed by one or more processors, causes the one or more processors to carry out a video teleconferencing method claimed in any one of claims 1 to 12.

14. A video teleconferencing apparatus comprising means for performing the steps of the video teleconferencing method according to one of claims 1 to 12.

15. A video teleconferencing system comprising at last one video teleconferencing apparatus according to claim 14.
